# EUROPEAN PATENT APPLICATION

(11) **EP 2 412 540 A1**
(43) Date of publication of application: **01.02.2012**
(21) Application number: 11175163.2
(22) Date of filing: 25.07.2011
(51) Int. Cl.: B42D 15/00, B42D 15/04, G09B 21/00

(54) **Product information insert, in particular for medicinal and cosmetic products**

(30) Priority: 28.07.2010 IT BO20100482
(71) Applicant: Contego Packaging Italy S.r.l., 29027 Podenzano (PC) (IT)
(72) Inventor: Folchini, Enrico, 20017 Rho (Milano) (IT); Casazza, Mario, 29029 Rivergaro (Piacenza) (IT)
(74) Representative: Lanzoni, Luciano

(57) **Abstract**

A product information insert (1), in particular for cosmetic and medicinal products, comprises at least one plane body (2) having at least one relief portion (7) bearing written information relating to a product the insert is associated with, and extending from a first surface (40) of the body (2); the body (2) further comprising at least one fold line (8) for folding the body (2) on itself into a respective condition of minimum dimensions where two half-parts (4a) of the first surface (40) are moved closer together; a spacer element (10), associated at least with the first surface (40) is also provided to keep the half-parts (4a) apart in the condition of minimum dimensions.

## Description

This invention relates to a product information insert, in particular for medicinal and cosmetic products.

More specifically, this invention relates to an information insert for products which must be accompanied by an information leaflet to describe their characteristics and mode of use.

Medicine packs, for example, are required to include information inserts commonly known as "patient information leaflets", bearing full information about the medicines they contain.

In the field of pharmaceutical and medical products, as is known, the patient information leaflet consists of a sheet of paper, folded on itself several times so it fits easily into the pack containing the product.

Generally speaking, current health regulations in different countries determine the information that must be provided in the leaflet to describe the doses and usage of a medicine.

For example, the following is printed on both sides of the patient information leaflet: the brand name (name of the drug), a brief description. quantity sold and copyright information; the company that manufactures and/or distributes the drug; ingredients of the drug; how the drug works and must be used, including warnings and precautions for its proper use; dosage and administration, when and how the drug should be taken, including possible results of overdosage or related problems; the expiry date and general warnings regarding the risks incurred if the drug is not used properly.

To date, this information is provided in the form of graphic printing using conventional printing technology.

A strongly felt need is that of placing an information leaflet for pharmaceutical and medical products, but also for other products, bearing information in Braille®, to provide visually impaired people with information regarding the use of the product which the information leaflet refers to.

As is known, Braille® is a writing system composed of raised dots arranged in different patterns on the surface of a sheet, normally made by embossing or adding material to the sheet (for example ink using any of several existing technologies). The patterns, being in relief with respect to the sheet, can be felt by passing the fingers over them.

In this context, the technical purpose which forms the basis of this invention is to propose a product information insert, in particular for, but not limited to, medicinal and pharmaceutical products, and which bears information that can be read and understood by a visually impaired user.

More specifically, this invention has for an aim to provide a product information insert, in particular for medicinal and pharmaceutical products, and which can be subjected to folding operations without affecting the readability of relief characters.

The technical purpose and aims specified are substantially achieved by a medicine information insert comprising the technical features described in one or more of the accompanying claims.

The invention, as better described below, contemplates the possibility of making an information leaflet not only for pharmaceutical and medical products, but also for other products, bearing information in Braille® to provide visually impaired people with information regarding the use of the product the information leaflet refers to. Further features and advantages of this invention are more apparent in the indicative, non-limiting description of a preferred embodiment of a product information insert, as shown in the accompanying drawings in which:
- Figure 1 is a perspective view of a product information insert according to this invention;
- Figure 2 is a perspective view of the insert of Figure 1 folded into a condition of minimum dimensions;
- Figure 3 is a lateral section of the insert folded as shown in Figure 2;
- Figure 4 is a perspective view of the insert folded as shown in Figure 2, and inserted into a respective medicine pack; and
- Figure 5 is a perspective view of another embodiment of the information insert according to this invention.

With reference to the accompanying drawings, the numeral 1 denotes in its entirety an information insert for medicinal products according to this invention.

It should be noted that the information insert 1 described below applies to a medicine. It will be understood that this is purely an example, since the insert 1 according to the invention can be associated with pharmaceutical products but also with other products, such as cosmetics, which are packed in boxes.

The example described below relates to an information insert 1 commonly known as "patient information leaflet", containing necessary information about the medicine it accompanies.

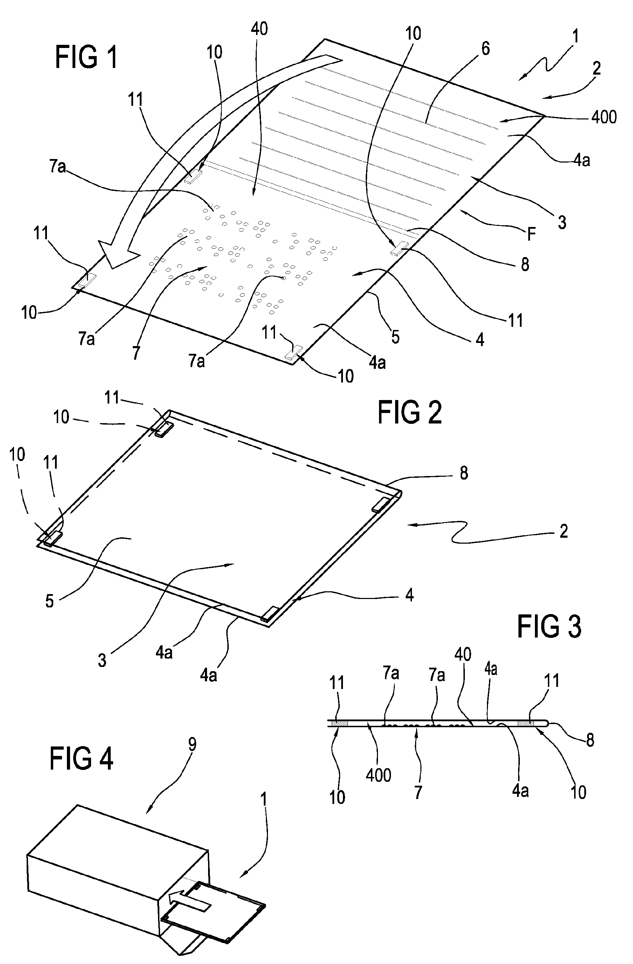

With reference in particular to Figure 1, it should be noted that the insert 1 comprises at least one plane body 2, consisting preferably of a sheet 3 made of paper.

Preferably, as illustrated in the accompanying drawings, the sheet 3 has a substantially quadrangular perimeter. It should nevertheless be specified that the sheet 3 may have any shape, depending on requirements linked to the use of the insert 1.

Still more preferably, the sheet 3 has a substantially rectangular perimeter.

The sheet 3 has a first face 4 and another face 5, opposite the first, where graphical representations 6 relating to the medicine, or other product, which the insert 1 accompanies, may also be printed.

It should be noted that the graphical representations 6 may be printed on both faces 4, 5 or on only one of the two faces 4, 5. In other embodiments not illustrated, these graphical representations may be absent.

The graphical representations 6 may comprise explanatory text, tables or drawings regarding the usage and doses of the medicine or any other necessary or useful information about the medicine. The sheet 3 also has a relief portion 7 with writing on it, extending at least from the first face 4 and relating to the product which the insert 1 accompanies, that is, referring to the example of the medicine.

The term "relief portion" is used in a broad sense to mean a plurality of regions which stand out from the first face 4 and which regions together form that relief portion.

The expression "writing relating to a product" is used to mean information about that product which, in the case of a medicine, may include, for example, the brand name, dosage, precautions for use, manufacturer, and so on.

In other words, the relief portion 7 identifies the writing itself.

Advantageously, the relief portion 7 comprises words in Braille®, so that the information about the product, that is, the medicine, can be addressed also to visually impaired people.

As schematically illustrated in the accompanying drawings, the relief portion 7 comprises a plurality of symbols 7a formed by raised dots standing out from the first face 4, and made preferably, but not exclusively, by embossing the sheet 3.

These raised dot symbols 7a identify the writing associated with the medicine.

The plane body 2 also has at least one fold line 8 - which divides the first face 4 into two half parts 4a - for folding the body 2 onto itself into a condition of minimum dimensions.

It should be noted that in the embodiment illustrated in Figures 1 to 4, the fold line 8 forms a first surface 40 and a second surface 400, both forming part of the first face 4.

Thus, the relief writing 7 stands out from the first surface 40.

In the configuration of minimum dimensions, the two half parts 4a of the first face 4, that is, the first surface 40 and the second 400, are close together.

More specifically, the fold line 8 forms a zone about which the sheet 3 is folded onto itself so it can be inserted more easily into a pack 9 containing a medicine or a product that requires packaging in a box (Figure 4).

Figure 2 illustrates the sheet 3 folded in half into the above mentioned condition of minimum dimensions.

It should, however, be specified that there may be any number of fold lines 8 and hence that the sheet 3 may have any number of folds, depending on the required size of the plane body 2 to be inserted into the pack 9.

It should also be noted that the plane body 2 comprises a plurality of protrusions 11, which in Figure 1 are illustrated schematically as being located near the outer edges of the sheet but which might also be located further inside the surface 40, and which stand out from the first surface 40 of the sheet 3 to prevent contact, after the sheet 3 has been folded, between the half parts 4a of the first face 4, that is to say, between the first surface 40 and the second 400.

In Figure 1 the protrusions 11 are placed at the periphery of the sheet 3. However, the protrusions 11 might also be in central portions of the first surface 40 of the sheet 3, depending on requirements.

The protrusions 11 constitute spacer elements 10, associated at least with the first face 4 and designed to keep the half parts 4a spaced apart when in the condition of minimum dimensions.

In other embodiments not illustrated, the plane body 2 comprises a single spacer element 10.

As illustrated in the drawings, each protrusion 11 is associated with the first face 4 by drawing into a die the paper surface the information leaflet is made of. Alternatively, each protrusion 11 might be associated with the first face 4 by gluing an amount of material to the surface 40.

As described in more detail below, the protrusions 11 prevent the Braille® writing from being flattened.

Preferably, the protrusions 11 are made of paper, so as to maintain the property of sustainability of the materials used, but other materials, such as polymeric, thermosetting and ink materials, might also be used.

The protrusions 11 may, however, be made of any material, provided always that the material keeps its dimensions even after the sheet 3 is folded and flattened. That way, the two half parts 4a of the first face 4 remain spaced apart from each other. In another embodiment not illustrated in the drawings, each protrusion 11 is made from a portion cut out of the plane body 2.

A tab is cut out and raised transversally of the planar extension of the first face 4 to form the protrusion 11.

In other words, the tab protrudes from the face 4. In yet another embodiment not illustrated in the drawings, the protrusions may also be placed on the second face 5 of the sheet 3.

In this situation, if the sheet 3 is folded a number of times (for example into four parts), the protrusions 11 on the first face 4 and on the second 5 make it possible to space each portion of the sheet 3 in such a way that the half portions formed by folding the respective faces 4, 5 never come into contact with each other.

Advantageously, the presence of the protrusions 11 guarantees the wholeness of the relief portion 7 by preventing the superposed half parts 4a from coming into contact with each other.

It should be noted, with reference in particular to Figure 2, that the protrusions 11 advantageously stand out from the first face 4 by a height much greater than the height of the dot symbols 7a making up the relief portion 7.

Thus, even when the half parts 4a of the first face 4, that is, the first surface 40 and the second 400, are against each other, the protrusions 11 enable the half parts 4 themselves, that is, the first surface 40 and the second 400 to remain spaced apart, thus preventing the relief portion 7 from being flattened.

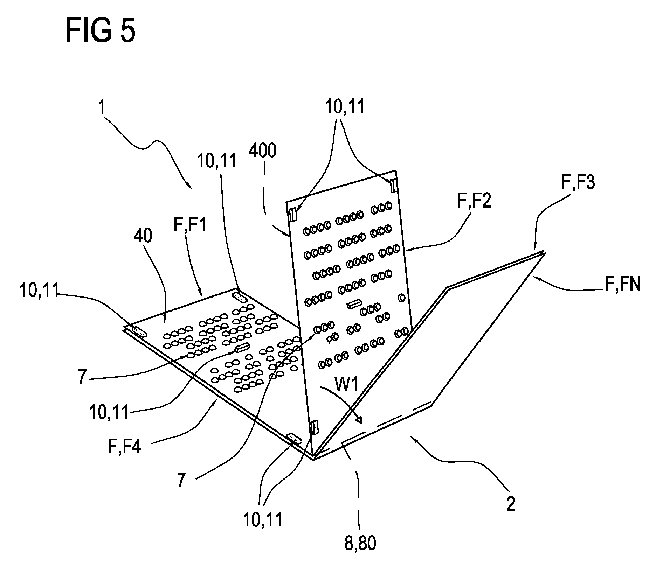

In an embodiment of the information insert 1 illustrated in Figure 5, the plane body 2 comprises a plurality of sheets F, labelled individually F1, F2, F3, F4 and FN and connected to each other along a connecting line 80.

According to the invention, the connecting line 80 constitutes a fold line 8 for the plane body 2.

In effect, it should be noted that the plane body 2 may be changed over from a configuration of minimum dimensions, not illustrated, to a working configuration for the user (illustrated in Figure 5) .

The working configuration can be reached, starting from the configuration of minimum dimensions, by turning one or more sheets about the fold line 8 in the direction of rotation W1.

In this embodiment, one of these sheets comprises the first surface 40, which is provided with the relief portion 7 bearing written information about the product, while another sheet F2 of the sheets F comprises the second surface 400.

In the configuration of minimum dimensions, the first surface 40 and the second 400 are close to each other.

According to the invention, the spacer element 10 prevents contact between the two surfaces 40 and 400 when in the configuration of minimum dimensions, avoiding the risk of flattening the relief portion 7.

More specifically, it should be noted that according to this embodiment, one or more sheets F bear information written in relief 7 about a product which the insert 1 accompanies.

In effect, in the embodiment illustrated by way of an example in Figure 5, the information written in relief 7 appears on sheets F1 and F2.

That way, information about the product can be distributed over the sheets F according to a defined logic so as to make it easier for a visually impaired user to find the information. This embodiment of the information insert 1 is intended for pharmaceutical or cosmetic products.

## Claims

1. A product information insert, in particular for cosmetic or medicinal products **characterized in that** it comprises at least one plane body (2) having at least one relief portion (7) bearing written information relating to a product the insert is associated with, and extending from a first surface (40) of the plane body (2);
the plane body (2) further comprising at least one fold line (8) for folding the plane body (2) into a respective condition of minimum dimensions where the first surface (40) and a second surface (400) of the plane body (2) itself are moved closer together;
at least one spacer element (10), associated at least with the first surface (40), being also provided to keep the first surface (40) and the second (400) surface apart in the condition of minimum dimensions.

2. The information insert according to claim 1, wherein the plane body (2) comprises a single sheet (F) and the fold line (8) allows the plane body (2) to be folded on itself into the configuration of minimum dimensions, the first surface (40) and the second (400) surface identifying respective portions (4a) of the same face (4) of the sheet (F).

3. The insert according to claim 2, **characterized in that** it comprises a plurality of fold lines (8), each forming a fold in the plane body (2), the spacer element (10) comprising a plurality of protrusions (11), some of the protrusions (11) standing out from the first surface (40) and other protrusions (11) standing out from a surface (5) of the sheet (F) opposite the first surface (40).

4. The information insert according to claim 1, wherein the plane body (2) comprises a plurality of sheets (F1, F2, F3, F4, FN) and the fold line (8) of the plane body (2) constitutes a line (80) connecting the sheets (F1, F2, F3, F4, FN), one (F1) of the sheets (F1, F2, F3, F4, FN) forming the first surface (40) and another (F2) sheet, adjacent to said one (F1) of the sheets (F1, F2, F3, F4, FN), forming the second surface (400).

5. The insert according to any of the foregoing claims, **characterized in that** the spacer element (10) is made by drawing the first surface (40) into a die.

6. The insert according to any of the foregoing claims, **characterized in that** the spacer element (10) is fixed to the first surface (40) or to the second surface (400).

7. The insert according to any of the foregoing claims, **characterized in that** the spacer element (10) comprises a protrusion (11) standing out from the first surface (40) or from the second surface (400) of the plane body (2).

8. The insert according to the preceding claim, **characterized in that** it comprises a plurality of spacer elements (10).

9. The insert according to claim 7 or 8, **characterized in that** the protrusions (11) are associated with the first surface (40) or with the second surface (400) by gluing.

10. The insert according to claim 7 or 8, **characterized in that** the protrusion (11) is made from a portion cut out of the plane body (2), and is raised in such a way as to protrude from the first surface (40) or from the second surface (400).

11. The insert according to any of the foregoing claims, **characterized in that** the plane body (2) comprises a sheet (3) made of paper.

12. The insert according to any of the foregoing claims, **characterized in that** the relief portion (7) comprises a plurality of dot symbols (7a) making up the written information in Braille@.
